(19)

Europäisches
Patentamt
European
Patent Office
Office européen
des brevets

(11) **EP 3 156 937 A1**

(12) **EUROPEAN PATENT APPLICATION**

(43) Date of publication:
19.04.2017 Bulletin 2017/16

(21) Application number: **15306654.3**

(22) Date of filing: **15.10.2015**

(51) Int Cl.:
***G06K 9/00*** *(2006.01)*          ***G06T 7/00*** *(2017.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Université Paris Est Créteil
94010 Créteil (FR)**

(72) Inventor: **CARPENTIER, Gilles
75015 PARIS (FR)**

(74) Representative: **Cabinet Novitech
188 Grande rue Charles de Gaulle
94130 Nogent-sur-Marne (FR)**

(54) **METHOD FOR ANALYSING A NUMERICAL IMAGE OBTAINED BY MICROSCOPY**

(57)     Method for analysing a numerical image acquired with a microscope, of a structure which can have a biological origin, the structure presenting at least one core element (1) and at least one tree structure (2) anchored to the core element (1), method which comprises the steps of- in a step (ia), detecting an edge (1 a) of core element (1) of the image, in a step (ib), detecting the tree structure (2) of the image and skeletonizing, the tree structure (2) detection (ib) being realised independently from the core element edge (1 a) detection (ia) and in a step (ic) skeletonization of the tree structure; in a step (ii), positioning and draw the edge (1 a) of the core element (1) in regard of a skeletonized tree structure (2) position on the binary image; in a step (iii), deleting an interior part (2b) of tree structure (2) located inside the edge (1 a) of the core element (1) and determining some anchorage junctions (8) between: an exterior part (2a) of tree structure (2) located outside the core element (1) and the edge (1 a) of the core element (1); in a step (iv), analysing the exterior part (2a) of tree structure (2).

EP 3 156 937 A1

**Description**

**FIELD OF THE INVENTION**

The invention concerns a method for analysing a numerical image of a cellular or multicellular structure which presents at least one core element and at least one tree structure anchored to the core element.

**STATE OF ART**

The High-Throughput Screening (HTS) technology using high throughput imaging gives a great quantity of images to analyse.

The methods in the state of art are not adapted with image which presents a core element.

The invention gives a new method to analyse a great quantity of images and is particularly adapted to angiogenesis and neurology studies.

Angiogenesis assay based on *in vitro* capillary like growth of endothelial cells (EC) is widely used, whether to evaluate the anti- or pro-angiogenesis properties of drugs or to test the differentiation capacities of endothelial stem cells.

Some assay like Fibrin Beads Assay (FBA) appeared with the development of microspheres. These microcarriers from size in range to 200 $\mu$m, once coated with endothelial cells and placed in fibrin matrix, exhibit three-dimensional (3D) capillary-like growth, which mimic the *in vivo* Ring Aortic (RA) test.

The high number of spheres that can be analyzed in a single culture well, with better defined conditions than using animal explants, makes this test highly efficient for *in vitro* angiogenesis evaluation.

Although widely used, the interpretation of these assays still remains a problem, especially to obtain a quantitative measure of the vessels-like organization.

On the other hand there is need today to analyse the neurons with a quantitative measure of the neurites-soma organization.

With the method of the invention, a same treatment can be applied for several applications:

- for the Beads Assay the sphere as the core element and pseudo-capillaries as the tree structure;
- for the neurons the soma as core element and neurites as the tree structure;
- for other structure like plants germination studies with the seed as core element, and roots as tree structure ;
- Every dendritic growth starting from a circular base (mineral infiltration in flat stones, mycelium growth etc...).

**DESCRIPTION OF DRAWINGS OF THE INVENTION**

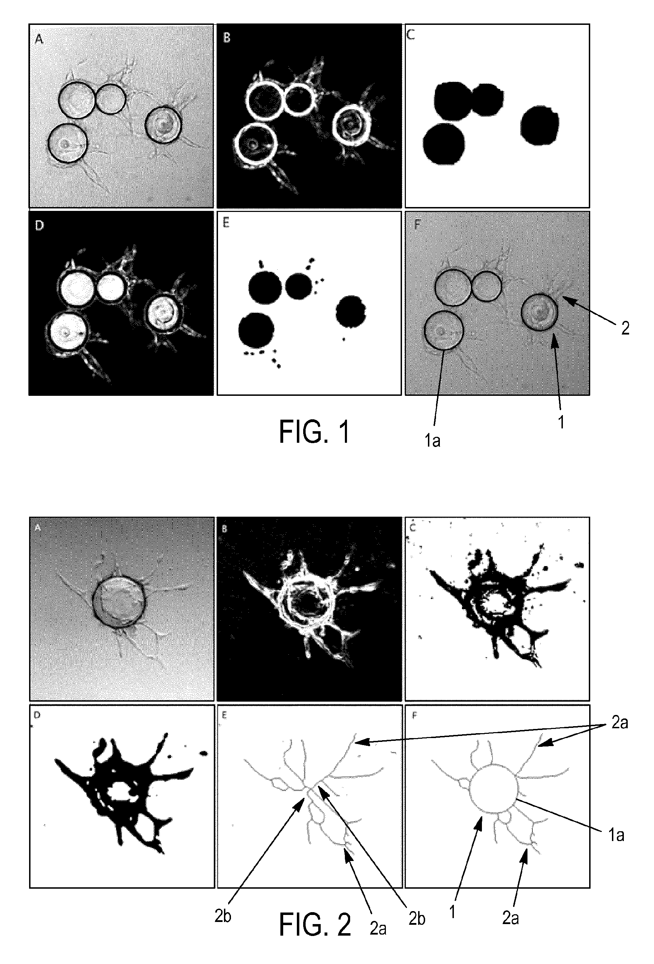

Legend of figure 1. Sphere or core element 1 detection steps.
A: sample of initial image. B: edge enhanced image (§2). C: first binary mask of spheres (§3). D: difference of B and C highlighting sphere interiors (§4). E: Binary mask corresponding to the interior of spheres (§4). F: final detection of sphere edges (§5). "§" labels correspond to the steps described in the methods section.

Legend of figure 2.
A: initial sample image, prior to tree analysis, exhibiting the detected sphere as a vector overlay (§1-§5). B: enhancement of high gradients and removal of background (§7). C: initial segmentation and D final binary segmentation. E: skeleton of the binary segmentation (§8). F: final skeleton including edge 1a of the core element 1, after sphere interior is cleared (§9). "§" labels correspond of the steps described in the methods section.

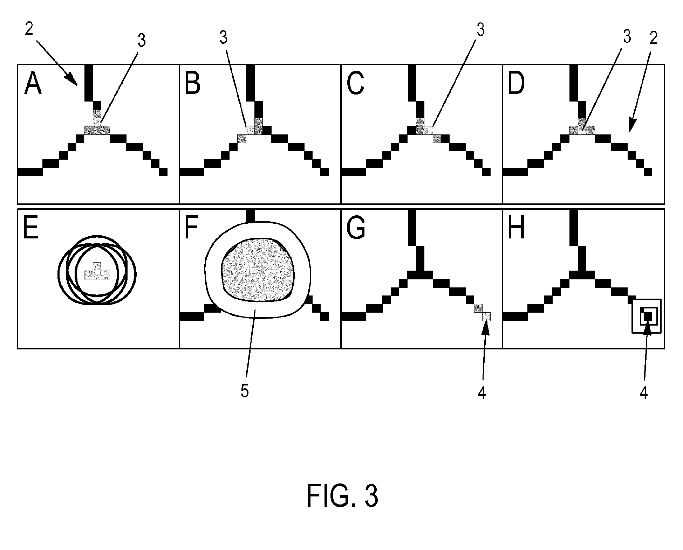

Legend of figure 3. Junction 5 and extremities 4 detection. This figure summaries the steps of junctions 5 and extremities 4 detection in a binary skeletonized tree structure 2. A to D represent the four pixels 3 which are linked to at least 3 neighbors. The junction between the three binary elements is composed by four nodes 3 materialized by circles of seven pixels of diameter (E). The border of the overlaying of these circles (F) is defined as the junction 5, materialized by its smoothed vectorial representation (F). Extremity 4 corresponds to a pixel linked to only one neighbor (G). H shows an extremity 4 and its representation (H).

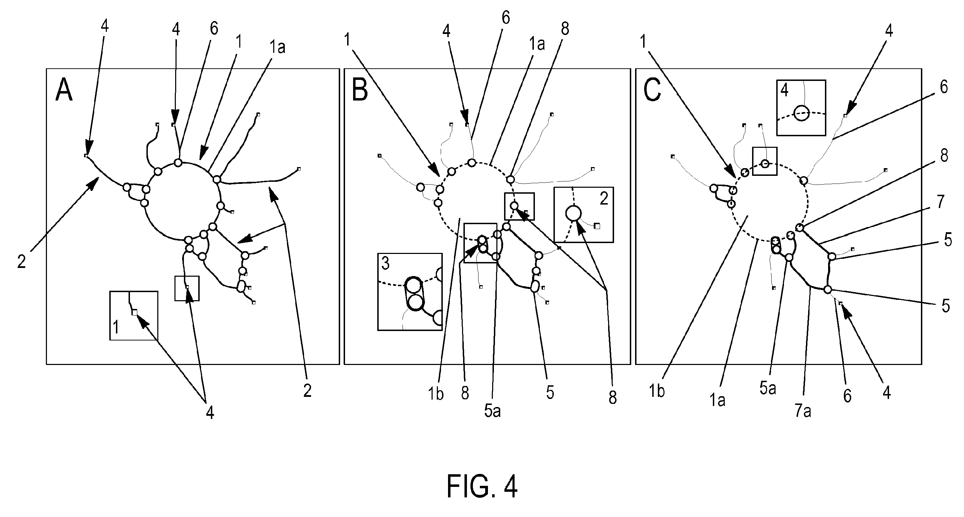

Legend of figure 4.
Panel A: extremities 4, dots surrounded (zoomed inset 1) as explained in Methods section step §10. Panel B exhibits the detection of branches 6 as defined on the Methods section step §11. Zoomed inset 2 corresponds to an artifactual branch (too small) which will be removed and zoomed inset 3 to fusion between two close junctions. Panel C shows detection of segments 7 and final analysis, including the anchorage junctions 8 (zoom inset 4) which intersect the sphere limit. Junctions which are connected to more than two segments are called master junctions 5a. An anchorage junction connected to at least one segment is assimilated to a master junction. After pruning of the structure and new analysis, elements linked to master junctions are called master segments 7a as described in the Method section step §12.

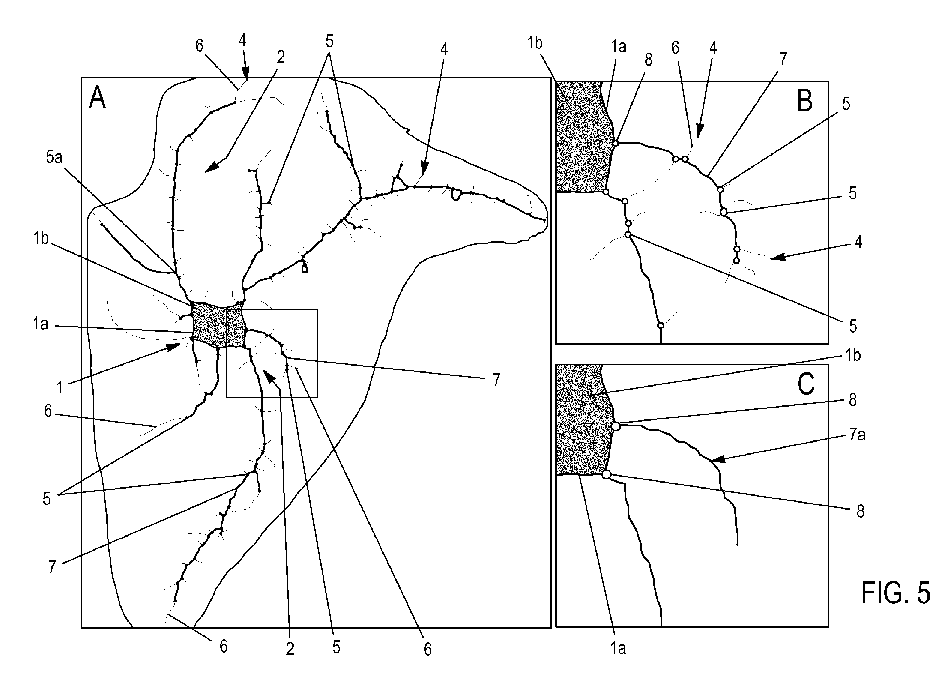

Legend of figure 5

Panel A: Glutamatergic neuron exhibiting MAP2 labelling. Soma area was manually highlighted and smoothed before automated image analysis. The picture shows original image and the vectorial detected objects. Panel B: zoomed area exhibiting soma edge 1 a; segments 7; junctions 5; branches 6. Panel C shows residual structure after pruning the tree structure 2 of panel B. The elements 7a and 5a detected in this residual tree structure 2 are called master segments and master junctions (anchorage junction 8 is assimilated to master junction 5a as explained in legend of figure 4).

## GENERAL DESCRIPTION OF THE INVENTION

The present invention concerns a method for analysing a numerical image acquired by microscopy, which contains the 2D visualisation of at least one cellular or multicellular structure, presenting one core element 1 (microelement) on which is anchored at least one tree structure 2.

The term 'cellular structure' means a structure which comprises one cell (for instance represents a neuron or dendritic cell, melanocytes, actinomycetes) and the term 'multicellular structure' means a structure which comprises several cells (for instance represents several endothelial cells located on a sphere and growing from this sphere, or plants germination studies with the seed as core element, and roots as tree structure or fungi).

The term 'anchor' means that the core element 1 and the tree structure 2 have a proximity allowing a connection by at least on pixel by using the image treatments described in the method section. So linked tree and core element are supposed to be physically linked in the reality. The " linked" term can be replaced by, 'connected', 'bound', 'attached'.

The method comprises the steps of:

- in a step (ia), detecting an edge 1 a of a core element 1 of the image by binary segmentation,
- in a step (ib), detecting the tree structure 2 of the image by binary segmentation of the tree structure 2, the tree structure 2 detection (ib) being realised independently of the detection of the edge 1 a of core element 1,
- in a step (ic) skeletonization of the binary mask obtained in the step (ib).

The word "detection" corresponds to objects having been outlined as a particle as defined in the ImageJ software.

The expression- "Edge of the core element" is materialized as a circle selection from 1 pixel thickness.

The word 'independently' means that the tree structure 2 is not detected with its anchorage on the edge 1 a of the core element 1, at the beginning of the method defined in the step (ib). In other words, for realising the detection of the tree structure 2, the method of the invention does not consider or do not take into account the detection of the edge 1 a of the core element 1.

The word 'skeletonization' means: repeatedly removal of pixels from the edges of objects in a binary image until they are reduced to single-pixel-wide shapes according the method implemented in the ImageJ software [9].

The core element 1 is a volume enclosed by an envelope, natural or artificial.

The edge of the core element 1 is continuous and closed, or considered and realised continuous and closed by the method.

The edge 1a of the core element 1 is a closed line, for instance a curvilinear line, which delimits a zone or an interior area 1 b. This zone or interior area 1 b corresponds to the core element 1 body shape as sampled by the 2D image acquisition.

The tree structure 2 represents ramifications or branched structure of one or several structures which can be from biological origin.

The step (ia) can be realised before or after the detection of the tree structure 2 of the step (ib).

The step (ib) is realised on all the image, tree or ramified structure on the same time.

After the step (ia) ,(ib) and (ic), the method comprises the following steps:

- in a step (ii), positioning the edge 1 a of the core element 1 in regard of the skeletonized tree structure 2 on the binary image;
- in a step (iii),
deleting an interior part 2b of skeletonized tree structure 2 located inside the edge 1 a of the core element 1 in an interior area 1 b, keeping the edge 1 a drawn (not deleting the edge 1 a), and

3

determining some anchorage junctions 8 between: an exterior part 2a of tree structure 2 located outside the edge 1 a of the core element 1 and the edge 1 a of the core element 1;

- in a step (iv), analysing the exterior part 2a of tree structure 2.

The expression "positioning" means to include the obtained sphere outline at the same position in the active image.

Advantageously, before and for the skeletonization of the binary tree structure 2 of the step (ib), the core element 1 is filled on the binary mask in an interior area 1 b defined by the edge 1 a (corresponding to its surface) of the core element 1 which forms a limit of the interior area 1 b, after the detection of the tree structure 2 of the step (ib).

It is realised for preventing creation of some artifactual tree structure 2 at the exterior of the edge 1a of the core element 1 when the skeletonization of the binary mask of the tree structure 2 is realized in the step (ib). Indeed, substructures (details in the interior or the sphere edge visible in figure 2a) may form artifactual voids during segmentation which could lead after skeletonization to loops extending to the exterior of the core edge 1 a.

By filling the core element, the procedure creates an artefact free area in the interior part 2b which does not correspond to biological element and which can be skeletonised without generating additional artifactual structure. In other words, the interior part 2b of the skeletonized tree structure is created only for obtaining the exterior part 2a of the skeletonized tree structure which corresponds only to the cellular extensions which have to be analyzed and measured.

In this case, the step (ia) is realised before the skeletonization of the tree structure 2 in the step (ic). In other words, it means that the skeletonization of the tree structure 2 is realised with a full core element 1, thus together with the skeletonization of the full core element 1.

For analysing the exterior part 2a of the skeletonized tree structure 2 in the step (iv), characteristic elements are located:

- a node 3 is a bifurcation pixel which has at least 3 neighbour pixels,
- an extremity 4 is a pixel which has only 1 neighbour pixel.

Then, the exterior part 2a skeletonized tree structure 2 analysis of the step (iv) comprises the determination of vectorial objects from characteristic elements:

- a junction 5 comprises at least one node 3,
- branches 6 which are line elements delimited by one extremity 4 and one junction 5,
- segments 7 which are line elements delimited by two junctions 5,
- an anchorage junction 8 is a junction which is in intersection with the edge 1 a of the core element 1.

A junction 5 is a smoothed circularized dot which comprises several nodes 3, for instance three nodes. For this, nodes are assimilated to circles of 7 pixels of diameter. The perimeter of the overlaying of these circles gives the junction limit after smoothing.

A line comprises several following pixels.

In the exterior part 2a skeletonized tree structure 2 analysis of the step (iv), additional vectorial objects can be determined:

- a master junction 5a is a junction not only linked to a branch 6 and linked to at least 3 segments.
- a master segment 7a is a line element linked to at least one master junction 5a.

In the exterior part 2a skeletonized tree structure 2 analysis of the step (iv), touching junctions, or too close junctions are fused into single junctions (typically when distance between two junctions is < 3 pixels for FBA and neurone).

This method avoids junctions and segments resulting from skeleton analysis, which size is not pertinent regarding to the biological object scale, to be taken into account in measurements.

In the exterior part 2a skeletonized tree structure 2 analysis of the step (iv), artifactual small branches 6 which present a line with a number of pixel inferior to a user set value (typically 10 pixels), are removed by an iterative pruning .

This function avoids artefactual small branches which have for origin residual image noise, or dirt in biological sample to be taken into account in the measurements.

In the exterior part 2a skeletonized tree structure 2 analysis of the step (iv), touching master junctions, or too close master junctions are fused into single master junctions, typically when distance between two master junctions is < 5 pixels for FBA and neurone.

This method avoids master junctions 5a and master segments 7a whose size has no meaning at the biological level to be taken into account in the measurements.

In a first embodiment, the method is advantageously applied for a core element 1 detected on a phase contrast image or a bright field image.

In particular, the core element 1 corresponding to a sphere which is detected as a circle on the image.

In this case, the method is advantageously applied for vessels or pseudovessels like self growth on microspheres, wherein the tree structure 2 corresponding to pseudovessels (endothelial cells) is detected as binary skeletons on the image of a multicellular structure which comprises cells on the microsphere 1 and the tree structure is composed with cells 2.

The method comprises for the sphere detection (ia), the following steps:

- A light field correction (§1);
- B: object edges enhancement (§2);
- C: first binary mask of core elements 1 (§3);
- D: difference of C and B highlighting core elements 1 interiors (§4);
- E: binary mask corresponding to the interior of core elements 1 (§4);
- F: final detection of core element edges 1 a (§5).

In particular, in more details, the method comprises for the sphere detection (ia), the following steps:

- (§1) Light field correction (lfc) is performed using an artificial flat field obtained by applying a Gaussian convolution with a sigma value corresponding to the average sphere diameter and uniform backgrounds are obtained by dividing the initial image by the flat field, with:

    ima1(lfc) = ima1 /Gauss$_\sigma$ (ima1) where ima1 is the original initial image (fig 1 A), and $\sigma$ value the standard diameter of sphere in pixels.

- (§2) Strong edges enhancement (enh) is performed by log transforming the image and applying a variance filter with a radius corresponding to the apparent thickness of the sphere edges, with:

    Ima1 (enh) = variance$_r$ [log(ima1(lfc))] where "r" is the radius corresponding to the minimum size of structures to detect (set to 2 pixels).

- (§3) Initial segmentation (spMask) is performed to get a coarse binary sphere mask by applying a threshold on ima1(enh) obtained using the « IsoData » method [3], binary objects resulting from analysis are then submitted to a cycle of closing-opening operations and filling holes, with:

    spMask = fillHole {Open {fillHole [Close(IsoData(ima1(enh)))]}}

- (§4) The interior of spheres is detected by a second segmentation (inMask) applied on the difference of images "spMask" and "ima1(enh)" (fig 1 D). The result is then segmented by using the "Minimum" threshold method [4] and submitted to hole filling and opening binary operators with:

    inMask= Open{fillHole [MinimumThreshold [Maximum2(ima1 (lfc) - spMask)]]}

- (§5) Sphere edges are detected by using binary object analysis of the "inerMask" binary mask, some circles are fitted to the edges and the diameters of the circles are enlarged to take into account the thickness of the sphere envelope.

In particular, in more details, the method comprises, for the tree structure 2 detection step (ii), from the detected core element 1 obtained in the step (ia), the following steps:

- light field correction and noise reducing (lfc) (§6);
- enhancement of high gradients, suppress the alternatively positive-negative aspect of objects inherent in phase contrast imaging and removal of background (§7);
- binary segmentation (§8);
- skeletonization of the binary segmentation (§9);
- final skeleton after core element 1 interior is cleared (§9).

The method comprises, for the tree structure 2 detection of the step (ib) and for the step (ic), from the detected sphere obtained in the step (ia), the following steps:

- (§6) Light field correction (lfc) is performed by using an artificial flat field obtained by applying a Gaussian convolution with a sigma value corresponding to the average sphere diameter, uniform backgrounds being obtained by dividing the initial image by the flat field, noise being removal using a band pass FFT (Fast Fourier Transform) filter (FFTbp) with:

  Ima2(lfc) = FFTbp(v1;v2) [ima2 / (Gauss$_\sigma$(ima2))] where "ima2" is the original image (fig 2A), "v1" is the minimum size of structures to keep and "v2" is a value corresponding to the size of the shadows to be removed.

- (§7) Edge enhancement (enh) is performed to increase the signal of the small cellular extensions. A variance filter is used to suppress the alternatively positive-negative aspect of objects inherent in phase contrast imaging as well as to increase high gradient areas. The histogram modal value is then subtracted to reduce the background (fig 2B).

  ima2(enh) = [variance$_r$ (Ima2(lfc)) - modal(variancer Ima2(lfc))] where "r" is the radius corresponding to the minimum size of structures to detect (set to 2 pixels).

- (§8) The image is then segmented using the "Mean" threshold method [5], creating a binary mask, the binary mask is smoothed and made continuous using closing and dilation binary operators with:

$$ima2(mask) = dilate \{close [MeanThresold(ima2(enh))]\}$$

- (§9) The area within the circles is filled and the resulting binary mask skeletonized; the structures which are not in contact with the circles corresponding to the previously detected spheres are removed to avoid artifactual objects; circles in the skeleton are cleared to get the final tree structure 2.

In another second embodiment, the method is advantageously applied for fluorescence image.

In particular, the method is advantageously applied for automated analysis of an image of a neuron which is a cellular structure, wherein the core element 1 is the soma of a neuron, and the tree structure 2 are neurites (dendrites and axons).

Soma detection and binary skeletonization of the tree structure 2 are realized:

- noise and background of initial image are removed respectively by Gaussian convolution with a sigma of 1.5 and a 2D so called "rolling ball" filter with a radius of 10 pixels;
- thresholding by the « Otsu » method [7] returns the segmented image « A »;
- the soma detection is performed by using a FFT band pass filter on the initial image, using a size filtering in order of the mean diameter of the soma;
- a thresholding according to the « MaxEntropy » method [8] is then performed after removal background by subtracting the mean value of the image histogram;
- edges of objects whose size corresponds to a soma are drawn and emptied in the binary Image « A ».

The present invention concerns also the image obtained with the method defined here above.

**I] Example: Invention applied for vessels like self growth on microspheres allowing for instance Fibrin Beads Assay (FBA) analysis**

A three dimensional *in vitro* model of angiogenesis is becoming used although tricky to establish. This test, the Fibrin Beads Assay (FBA), consists in the culture of endothelial cells at the surface of microspheres from size about 200 μm embedded in fibrin matrix in the presence of normal dermal human fibroblast (NHDF) as growth factors feeder layer.

The adaptation of this model to 96 well plates allows high throughput screening purposes with very few amounts of test drugs. The method presents the advantage to be nearest to another test, the Rat Aortic Sprouting Assay (RASA). The microcapillaries appearing during the growth and differentiation of the EC mimic the sprouting obtained with organotypic *in vitro* culture of rat aorta explants. Although three dimensional, the extensions appeared preferentially more or less horizontally. Thanks to a relatively depth of field, phase contrast method of microscopy observation is convenient to get in a single picture a good sampling of a field. Furthermore, this observation method is not toxic for cells and easier to use than fluorescence which can present phototoxicity for time lapse recording. In this work, we developed new functions for the Angiogenesis Analyzer [1] allowing FBA analysis from sphere detection to pseudo vessel organization analysis. The project is programmed with the easily comprehensible macro language of ImageJ, the free image analysis software of the NIH developed by Wayne Rasband (Rasband 1997-2015) [2].

Material and methods

Fibrin bead assays

Fibrin bead assays were carried out to analyze the three-dimensional sprouting of HUVEC from the surface of dextran-coated Cytodex 3 microcarriers beads (GE Healthcare Europe GmbH, Freiburg, Germany) embedded in fibrin gels. HUVEC coated beads were cultured into 96 well-optical plate (BD Falcon) suitable for high throughput imagers. Cultures were imaged at Day 4. In order to quantify the sprouting microvessel network, samples were automatically scanned with a hightroughput imager (IXM, Molecular Device) with 4x objective at 4 sites of the wells in order to cover the entire surface of the wells.

Image Analysis

Image analysis was performed using a macro developed for the ImageJ software [2]. This macro is an extension of the Angiogenesis Analyzer for ImageJ [1]. The analysis can be divided in three main steps: sphere detection, tree structure 2 detection and the tree structure 2 analysis.

Methods, sphere and tree structure 2 detection part.

Sphere detection:

Sphere analysis in ideal conditions does not present particular difficulties. However, sphere clustering, dirt, uneven lighting due to the meniscus of the culture medium and the walls of the culture wells introduce difficulties, especially defaults of object closure. A series of image manipulations were necessary to enable sphere detection using simple threshold methods.

Sphere detection consists of the following steps:

(§1) Light field correction (lfc) was performed using an artificial flat field obtained by applying a Gaussian convolution with a sigma value corresponding to the average sphere diameter. Uniform backgrounds were obtained by dividing the initial image by the flat field.

ima1(lfc) = ima1 / Gauss$_\sigma$ (ima1) where ima1 is the original image (fig 1A), and $\sigma$ value the standard diameter of sphere in pixels.

(§2) Strong edges enhancement (enh) was then performed by log transforming the image and applying a variance filter with a radius corresponding to the apparent thickness of the sphere edges (fig 1 B).

Ima1 (enh) = variance$_r$ [log(ima1 (lfc))] where "r" is the radius corresponding to the minimum size of structures to detect (set to 2 pixels).

(§3) Initial segmentation (spMask) for obtaining approximative limits of spheres on the image was obtained as binary mask by applying a threshold on ima1 (enh) using the « IsoData » method [3].

Binary objects resulting from analysis were then submitted to a cycle of closing-opening operations and filling holes (fig 1 C).

$$spMask = fillHole \{Open \{fillHole [Close(IsoData(ima1(enh)))]\}\}$$

This formulae can be understood as follows:

Image resulting from §2 step (Ima1(enh)) is submitted to treatments in this specific order of the method of the invention :

"IsoData" threshold, closing, filling holes, opening, filling holes. (note: closing, opening and filling holes operations correspond to classical mathematical morphology operators implemented in the ImageJ code but are not used in the state of art, in the order or sequence of the invention).

(§4) Clustered spheres with touching edges can be difficult to separate, depending of the lighting. To limit errors, the interior of spheres were detected by a second segmentation (inMask) applied on the difference of images "spMask" and "ima1 (enh)" (fig 1D).

The result of this step was then segmented by using the "Minimum" threshold method [4], and submitted to hole filling and opening binary operators (fig 1 E).

$$inMask = Open\{fillHole\ [MinimumThreshold\ [Maximum_2(ima1(lfc) - spMask)]]\}$$

This formulae can be understood as follows:

spMask is subtracted from image (ima1(lfc)). The result of this operation is submitted to a maximum filter (radius of 2 pixels), a threshold according to the "Minimum" method and then submitted to filling hole and opening operators. (note: Maximum, opening and filling holes operations correspond to classical mathematical morphology operators implemented in the ImageJ code but are not used in the state of art in the order of the invention).

(§5) Sphere edges were detected by using binary object analysis of the "inMask" binary mask, circles were fitted to the edges and the diameters were enlarged to take into account the thickness of the sphere envelope.

Figure 1F shows the sphere edges.

Tree structure 2 detection:

Tree structure 2 detection consists of segmentation, avoiding shadows due to phase contrast lighting and small acellular structures, followed by skeletonization.

The steps in the process are summarized below.

(§6) Light field correction (lfc) was performed in the same manner as §1.

Light field correction (lfc) was performed using an artificial flat field obtained by applying a Gaussian convolution with a sigma value corresponding for instance to 200 x the size of the minimum detail expected in the tree detection (typically 400 pixels). Uniform backgrounds were obtained by dividing the initial image by the flat field.

Then, light field correction (lfc) was followed by noise removal using a band pass FFT (Fast Fourier Transform) filter (FFTbp).

$Ima2(lfc) = FFTbp(v1;v2)\ [ima2 / (Gauss_\sigma(ima2))]$ where "ima2" is the original image (fig 2A), "v1" is the minimum size of structures to keep and "v2" is a value corresponding to the size of the shadows to be removed. "v2" has the same value than "$\sigma$". These values depending of the image resolution are typically "v1" =1.5 and "v2" = "$\sigma$" = 400.

(§7) Edge enhancement (enh) was performed to increase the signal of the small cellular extensions. A variance filter was used to suppress the alternatively positive-negative aspect of objects inherent in phase contrast imaging as well as to increase high gradient areas. The histogram modal value was then subtracted to reduce the background (fig 2B).

$ima2(enh) = [variance_r\ (Ima2(lfc))$ - $modal(variance_r\ Ima2(lfc))]$ where "r" is the radius corresponding to the minimum size of structures to detect (set to 2 pixels).

(§8) The image was then segmented using the "Mean" threshold method [5], creating a binary mask (fig 2C). The mask was smoothed and made continuous using closing and dilation binary operators (fig 2D).

$$ima2(mask) = dilate\ \{close\ [Mean\ Threshold(ima2(enh))]\}$$

This formulae can be understood as follows:

Image (ima2(enh)) resulting from §7 is submitted to treatments in this particular and specific order of the method of the invention :

threshold (Mean method), closing and dilatation.
(note: dilatation and closing operations correspond to classical mathematical morphology operators implemented in the ImageJ code and not used in the state of art in the order or sequence of the invention).

(§9) The area within the circles was filled and the resulting binary mask skeletonized (fig 2E). Structures not in contact with the circles corresponding to the previously detected spheres were removed to avoid artifactual pseudo capillary objects. Circles in the skeleton were cleared to get the final tree structure 2 (fig 2F).

Methods, analysis part.

Tree structure 2 analysis: junctions and extremities detection:

(§10) The tree structure 2 analysis started by junctions and extremities detection.
To perform this we defined 3 sub-elements: nodes 3 which consisted in the minimum structure allowing a bifurcation in a skeletonized network, junctions and extremities.
A pixel corresponded to a node 3, when it had at least 3 neighbors (fig 3 A-D). To avoid eventual further skeletonization artifacts, each pixel forming node 3 was then replaced by a circular dot from 7 pixels of diameter (fig 3E).
Junctions were formed by the smoothed perimeter of the group of dots associated to a bifurcation (fig 3F).
A pixel was qualified as an extremity 4 when it had only one neighbor (fig 3 G-H).
Figure 3 summaries some different configurations of nodes leading to a junction 5 and an extremity 4.
§11. Tree structure 2 analysis: segments 7, branches 6 and anchorage junctions 8 detection:

Result of step §10 (fig 4A) was submitted to analysis in branch and segment content, according to the following definitions.

Branches 6 were lines which were linked to one junction 5 and one extremity 4 (fig 4B) and segments 7 were lines connected to the main tree structure 2 by two junctions 5 (Fig 4C).
Advantageously, touching junctions, or too close junctions were fused into single junctions 5 (zoom inset 3, fig 4B) and artifactual small branches were removed by an iterative pruning (zoom inset 2, fig 4B).
Segments corresponding to circle pieces intercepting circle selections were removed as previously described [6].
In the same principle, the junctions which intercepted circles corresponding to sphere limits were defined as anchorage junctions 8 (zoom inset 4 fig 4 C).
At this step, the automatic analysis resulted in a model of the sphere and its associated tree structure 2, consisting in a group of vectorial objects (extremities 4, junctions 5, branches 6, segments 7 and anchorage junctions 8) which were counted and measured for statistical calculations.

§12. Master junctions and master segments detection

A refinement is obtained by introducing some simple hierarchical notions in the analysis:

Pruning of this modelled tree structure results in a tree structure in which every branches is removed.
Junctions 5a and elements 7a detected in this residual tree structure 2 after new analysis are called respectively master junctions and master segments (figure 4A and 4C).
This corresponds for master junctions, to junctions which are linked to at least 3 segments. Anchorage junctions linked to at least one segment are assimilated to master junctions.
This corresponds for master segments to elements connecting to one or two master junctions 5a (or anchorage junction 8).
Master segments which size is for instance inferior to 5 pixels are fused with their connected master junctions. Note: This step avoids master junctions and master segments which size has no meaning at the biological level to be taken into account in the measurements.

**II] Example: Invention for automated analysis of a neuron, wherein the core element 1 is a soma of a neuron and the tree structure 2 are neurites (dendrites and axons)**

Automated analysis of the neuron consists in three steps; detection of the soma edges, detection of the binary skeleton fitting to the neuritic tree structure 2 and analysis of this tree structure 2 by a customized version of the « Angiogenesis Analyzer » [1], a tool programmed for the ImageJ software [2].
Soma detection and binary skeletonization can be summarized as follows: noise and background of initial image were removed respectively by Gaussian convolution with a sigma of 1.5 and a 2D so called « rolling ball filter » with a radius of 10 pixels.
Thresholding by the « Otsu » method [7] returns the segmented image « A ».
The soma detection was performed by using a FFT band pass filter on the initial image, using a size filtering in order of the mean diameter of the soma.

A thresholding according to the « MaxEntropy » method [8] was then performed after removal background by subtracting the mean value of the image histogram.

Edge 1 a of objects whose size corresponds to a soma was drawn and emptied in the binary Image « A ».

Skeletonization of the result of this step gave the binary skeleton then submitted to the modified « Angiogenesis Analyzer » for quantification of the tree structure 2: briefly, a first step deduced junctions 5, corresponding to bifurcations, branches 6 (elements limited by one extremity 4 and one junction 5) and segments 7 (elements limited by two junctions 5), from the skeleton (Fig 5A and 5C).

Pruning of this modelled tree structure 2 resulted in a tree structure 2 in which every branch was removed.

Junctions 5a and lines 7a detected in this residual tree structure 2 are called respectively master junctions and master segments (figure 5A and 5C).

Master segments which size is for instance inferior to 5 pixels are fused with their connected master junctions, into a single new master junction. This step avoids master junctions and master segments which size has no meaning at the biological level to be taken into account in the measurements.

Measurement of these modelled structures allowed quantification of the neuronal structure.

The invention concerns also the use of the method for the FBA or neuron analysis, to measure and count the number of:

- junctions 5,
- branches 6,
- segments 7,
- anchorage junctions 8,
- master junctions 5a,
- master segments 7a.

With these numbers and measurements, graphs can be done for deducing some characteristic elements on the tree structure 2 which can be linked to effect of a disease or a drug.

**References used for the invention**

[1] Carpentier G. Angiogenesis Analyzer, ImageJ News, 1.47e, 9 November 2012, available on the NIH website at the http://rsb.info.nih.gov/ij/macros/toolsets/Analogenesis%20Analyzer.txt

[2] Rasband, W.S., ImageJ, U. S. National Institutes of Health, Bethesda, Maryland, USA, http://imagej.nih.gov/ij/, 1997-2015.

[3] Ridler, TW & Calvard, S (1978), "Picture thresholding using an iterative selection method", IEEE Transactions on Systems, Man and Cybernetics 8: 630-632.

[4] Prewitt, JMS & Mendelsohn, ML (1966), "The analysis of cell images", Annals of the New York Academy of Sciences 128: 1035-1053

[5] Glasbey, CA (1993), "An analysis of histogram-based thresholding algorithms", CVGIP: Graphical Models and Image Processing 55: 532-537

[6] Carpentier G. Sort Selections in Overlays, ImageJ News, 1.47m 6 March 2013, available on the NIH website at the http://rsb.info.nih.gov/ij/macros/Sort-Selections-in-Overlays.txt

[7] Otsu, N (1979), "A threshold selection method from gray-level histograms", IEEE Trans. Sys., Man., Cyber. 9: 62-66, doi:10.1109/TSMC.1979.4310076

[8] Kapur, JN; Sahoo, PK & Wong, ACK (1985), "A New Method for Gray-Level Picture Thresholding Using the Entropy of the Histogram", Graphical Models and Image Processing 29(3): 273-285

[9] Zhang and Suen. A fast parallel algorithm for thinning digital patterns. CACM 27(3):236--239, 1984.

**Claims**

**1.** Method for analysing a numerical image obtained by microscopy, of at least one cellular or multicellular structure, the structure presenting at least one core element (1) and at least one tree structure (2) anchored to the core element (1), method which comprises the steps of:

- in a step (ia), detecting an edge (1 a) of core element (1) of the image by binary segmentation,

- in a step (ib), detecting the tree structure (2) of the image by binary segmentation, the tree structure (2) detection (ib) of the step (ib) being realised independently from the core element edge (1 a) detection of the step (ia);
- in a step (ic), skeletonizating a binary mask of the tree structure (2),
- in a step (ii), positioning the edge (1a) of the core element (1) in regard of a skeletonized tree structure (2) on the binary image ;
- in a step (iii), deleting an interior part (2b) of skeletonized tree structure (2) located inside the edge (1 a) of the core element (1) in an interior area (1b), keeping the edge (1 a) drawn, and determining some anchorage junctions (8) between: an exterior part (2a) of tree structure (2) located outside the edge (1 a) of the core element (1) and the edge (1 a) of the core element (1) ;
- in a step (iv), analysing the exterior part (2a) of skeletonized tree structure (2).

2. Method according to claim 1, wherein for the skeletonization of the binary mask of the tree structure (2) of the step (ic), the core element (1) is filled on the binary image in the interior area (1b) defined by the edge (1 a) of the core element (1), after the detection of the tree structure (2) of the step (ib).

3. Method according to claim 1 or 2, wherein for analysing the exterior part (2a) of the skeletonized tree structure (2) in the step (iv), characteristic elements are defined:

   - a node (3) is a bifurcation pixel which has at least 3 neighbours pixel,
   - an extremity (4) is a pixel which has only 1 neighbour pixel.

4. Method according to claim 3, wherein the exterior part (2a) skeletonized tree structure (2) analysis of the step (iv) comprises the determination of vectorial objects from characteristic elements:

   - a junction (5) comprises at least one node (3),
   - branches (6) which are line elements delimited by one extremity (4) and one junction (5),
   - segments (7) which are line elements delimited by two junctions (5),
   - an anchorage junction (8) is a junction which is in intersection with the edge (1 a) of the core element (1).

5. Method according to claim 4, wherein in the exterior part skeletonized tree structure (2a) analysis of the step (iv), additional vectorial objects are determined:

   a master junction (5a) is a junction linked to at least 3 segments,
   a master segment (7a) is a line element subsisting after pruning of the tree, linked to at least one master junctions (5a), or an anchorage junction (8).

6. Method according to one of claims 4 or 5, wherein in the exterior part skeletonized tree structure (2a) analysis of the step (iv), artifactual small branches which present a line with a number of pixel inferior to a user set value, are removed by an iterative pruning.

7. Method according to one of claims 5 or 6, wherein in the exterior part skeletonized tree structure (2a) analysis of the step (iv), touching master junctions (5a), or too close master junctions are fused into single master junctions.

8. Method according to one of claims 1 to 7, applied on a multicellular structure wherein the core element (1) corresponding to a sphere which is detected as a circle on the image and which is materialized after image analysis by a closed line on which tree structures are anchored, the edge (1 a) of the core element comprises endothelial cells and the tree structure (2) composed of endothelial cells.

9. Method according to claim 8, wherein the method comprises for the sphere detection of the step (ia), the following steps:

   - A: light field correction (§1);
   - B: edge (1a) enhanced image (§2);
   - C: first binary mask of core elements (1) (§3);
   - D: difference of C and B highlighting core elements interiors (§4);
   - E: binary mask corresponding to the interior of core elements (1) (§4);
   - F: final detection of core element edges (1 a) (§5).

**10.** Method according to claim 9, wherein the method, comprises for the sphere detection (ia), the following steps:

- (§1) Light field correction (lfc) is performed using an artificial flat field obtained by applying a Gaussian convolution with a sigma value corresponding to the average sphere diameter and uniform backgrounds are obtained by dividing the initial image by the flat field, with:

ima1(lfc) = ima1 / $Gauss_\sigma$ (ima1) where ima1 is the initial image, and $\sigma$ value the standard diameter of sphere in pixels.

- (§2) Strong edges enhancement (enh) is performed by log transforming the image and applying a variance filter with a radius corresponding to the apparent thickness of the sphere edges, with:

Ima1 (enh) = $variance_r$ [log(ima1(lfc))] where "r" is the radius corresponding to the minimum size of structures to detect (set to 2 pixels).

- (§3) Initial segmentation (spMask) is performed to get a coarse binary sphere mask by applying a threshold on ima1 (enh) obtained using the « IsoData » method, binary objects resulting from analysis are then submitted to a cycle of closing-opening operation and filling holes, with:

spMask = fillHole {Open {fillHole [Close(IsoData(ima1(enh)))]}}

- (§4) the interior of spheres are detected by a second segmentation (inMask) applied on the difference of images "spMask" and "ima1(enh)", the result is then segmented by using the "Minimum" threshold method and submitted to hole filling and opening binary operators with:

inMask= Open{fillHole [MinimumThreshold [Maximum2(ima1(lfc) - spMask)]]}

- (§5) Sphere edges are detected by using binary object analysis of the "inerMask" binary mask, some circles are fitted to the edges and the diameters of the circles are enlarged to take into account the thickness of the sphere envelope.

**11.** Method according to one of claims 8-10, wherein the method comprises, for the tree structure detection step (ib) and for the step (ic), the following steps:

- A: light field correction and noise reducing (lfc) (§6);
- B: enhancement of high gradients, suppress the alternatively positive-negative aspect of objects inherent in phase contrast imaging and removal of background (§7);
- C: binary segmentation (§8);
- D: skeleton of the binary segmentation (§9);
- E: final skeleton after core element interior is cleared (§9).

**12.** Method according to claim 11, wherein the method comprises, for the tree structure (2) detection of the step (ib) and for the step (ic), from the detected sphere obtained in the step (ia), the following steps:

- (§6) Light field correction (lfc) is performed by using an artificial flat field obtained by applying a Gaussian convolution with a sigma value corresponding to the average sphere diameter, uniform backgrounds being obtained by dividing the initial image by the flat field, noise being removal using a band pass FFT (Fast Fourier Transform) filter (FFTbp) with:

Ima2(lfc) = $FFTbp_{(v1;v2)}$ [ima2 / ($Gauss_\sigma$(ima2))] where "ima2" is the original image (fig 2A), "v1" is the minimum size of structures to keep and "v2" is a value corresponding to the size of the shadows to be removed.

- (§7) Edge 1 a enhancement (enh) is performed to increase the signal of the small cellular extensions; a variance filter is used to suppress the alternatively positive-negative aspect of objects inherent in phase contrast imaging as well as to increase high gradient areas; the histogram modal value is then subtracted to reduce the background. ima2(enh) = [$variance_r$ (Ima2(lfc)) - modal($variance_r$ Ima2(lfc))] where "r" is the radius corresponding in to the minimum size of structures to detect (set to 2 pixels).

- (§8) The image is then segmented using the "Mean" threshold method, creating a binary mask, the binary mask is smoothed and made continuous using closing and dilation binary operators with:

$$ima2(mask) = dilate \{close [MeanThresold(ima2(enh))]\}$$

- (§9) The area within the circles is filled and the resulting binary mask skeletonized; the structures which are not in contact with the circles corresponding to the previously detected spheres are removed to avoid artifactual objects; circles in the skeleton are cleared to get the final tree structure (2).

13. Method according to one of claims 1-7, applied for automated analysis of a image of a neuron which is the cellular structure, wherein the core element (1) is a soma of a neuron and the tree structure (2) are neurites.

14. Method according to claim 13, wherein soma detection and binary skeletonization of the tree structure (2) are realized:

- noise and background of initial image are removed respectively by Gaussian convolution with a sigma of 1.5 and a 2D so called « rolling ball filter » with a radius of 10 pixels;
- thresholding by the « Otsu » method returns the segmented image « A »;
- the soma detection was performed by using a FFT band pass filter on the initial image, using a size filtering in order of the mean diameter of the soma;
- a thresholding according to the « MaxEntropy » method was then performed after removal background by subtracting the mean value of the image histogram;
- edge (1 a) of objects whose size corresponds to a soma was drawn and emptied in the binary Image « A ».

15. Image obtained with the method according to claims 1-14

FIG. 1

FIG. 2

FIG. 3

FIG. 4

EP 3 156 937 A1

FIG. 5

EP 3 156 937 A1

Europäisches
Patentamt

European
Patent Office

Office européen
des brevets

# EUROPEAN SEARCH REPORT

Application Number

EP 15 30 6654

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JAYDEEP DE ET AL: "A Graph-Theoretical Approach for Tracing Filamentary Structures in Neuronal and Retinal Images", IEEE TRANSACTIONS ON MEDICAL IMAGING., vol. 35, no. 1, 24 August 2015 (2015-08-24), pages 257-272, XP055259689, US ISSN: 0278-0062, DOI: 10.1109/TMI.2015.2465962 * sections I-IV * * abstract; figures 1-11 * | 1-15 | INV. G06K9/00 G06T7/00 |
| A | ALBERTO SANTAMARÍA-PANG ET AL: "Automatic Morphological Reconstruction of Neurons from Multiphoton and Confocal Microscopy Images Using 3D Tubular Models", NEUROINFORMATICS, vol. 13, no. 3, 29 January 2015 (2015-01-29), pages 297-320, XP055259680, Boston ISSN: 1539-2791, DOI: 10.1007/s12021-014-9253-2 * page 297, right-hand column, line 1 - page 298, right-hand column, line 54 * | 1-15 | |

| TECHNICAL FIELDS SEARCHED (IPC) |
|---|
| G06K G06T |

The present search report has been drawn up for all claims

| Place of search | Date of completion of the search | Examiner |
|---|---|---|
| The Hague | 18 March 2016 | Nilsson, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CARPENTIER G.** Angiogenesis Analyzer. *ImageJ News,* 09 November 2012, http://rsb.info.nih.gov/ij/macros/toolsets/Analogenesis%20Analyzer.txt
- **RASBAND, W.S.** ImageJ. U. S. National Institutes of Health, 1997
- **RIDLER, TW ; CALVARD, S.** Picture thresholding using an iterative selection method. *IEEE Transactions on Systems, Man and Cybernetics,* 1978, vol. 8, 630-632
- The analysis of cell images. **PREWITT, JMS ; MENDELSOHN, ML.** Annals of the New York Academy of Sciences. 1966, vol. 128, 1035-1053
- **GLASBEY, CA.** An analysis of histogram-based thresholding algorithms. *CVGIP: Graphical Models and Image Processing,* 1993, vol. 55, 532-537

- **CARPENTIER G.** Sort Selections in Overlays. *ImageJ News,* 06 March 2013, http://rsb.info.nih.gov/ij/macros/Sort-Selections-in-Overlays.txt
- **OTSU, N.** A threshold selection method from gray-level histograms. *IEEE Trans. Sys., Man., Cyber.,* 1979, vol. 9, 62-66
- **KAPUR, JN ; SAHOO, PK ; WONG, ACK.** A New Method for Gray-Level Picture Thresholding Using the Entropy of the Histogram. *Graphical Models and Image Processing,* 1985, vol. 29 (3), 273-285
- **ZHANG ; SUEN.** A fast parallel algorithm for thinning digital patterns. *CACM,* 1984, vol. 27 (3), 236-239